# EUROPEAN PATENT APPLICATION

(11) **EP 4 811 440 A1**
(43) Date of publication of application: **23.09.2026**
(21) Application number: 26165028.7
(22) Date of filing: 16.03.2026
(51) Int. Cl.: H01M 4/133, H01M 4/36, H01M 4/62, H01M 4/525, H01M 4/583, H01M 4/1393, H01M 10/0525, H01M 4/04

(54) **ANODE FOR LITHIUM SECONDARY BATTERY AND LITHIUM SECONDARY BATTERY**

(30) Priority: 18.03.2025 KR 20250034982
(71) Applicant: SK On Co., Ltd., Seoul 03161 (KR)
(72) Inventor: CHUNG, Ju Ho, 34124 Daejeon (KR); KIM, Seon Ah, 34124 Daejeon (KR); PARK, Yang Kyu, 34124 Daejeon (KR)
(74) Representative: Prüfer & Partner mbB Patentanwälte · Rechtsanwälte

(57) **Abstract**

An anode for a lithium secondary battery includes an anode current collector, and an anode active material layer on the anode current collector. The anode active material layer includes a carbon-based active material and a silicon-based additive. A content of the silicon-based additive is in a range from 0.1 wt% to 1.0 wt% based on a total solid weight of the anode active material layer. A silicon crystallite size of a (111) plane of the silicon-based additive measured by an X-ray diffraction (XRD) analysis is in a range from 100 nm to 500 nm.

## Description

### CROSS-REFERENCE TO RELATED APPLICATION

This application claims priority to Korean Patent Application No. 10-2025-0034982 filed on March 18, 2025, the entire disclosure of which is incorporated by reference herein.

### BACKGROUND

### 1. Field

The present disclosure provides an anode for a lithium secondary battery and a lithium secondary battery.

### 2. Descriptions of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle such as hybrid vehicle.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

A lithium secondary battery may include an electrode assembly including a cathode, an anode and a separation layer (separator). For example, the cathode and the anode may be formed by coating an electrode-forming composition on an electrode current collector such as a metal foil. The electrode-forming composition may be prepared by mixing an electrode active material with a binder and a solvent, and may be prepared in the form of, e.g., a slurry.

Recently, as an application range of the lithium secondary battery is being expanded, higher capacity and power characteristics are required. Further, the lithium secondary battery having stable capacity, power and cycle properties are being developed.

### SUMMARY

According to an aspect of the present disclosure, there is provided an anode for a lithium secondary battery having improved electrochemical property and stability.

According to an aspect of the present disclosure, there is provided a lithium secondary battery having improved electrochemical property and stability.

An anode for a lithium secondary battery includes an anode current collector, and an anode active material layer on the anode current collector. The anode active material layer includes a carbon-based active material and a silicon-based additive. A content of the silicon-based additive is in a range from 0.1 wt% to 1.0 wt% based on a total solid weight of the anode active material layer. A silicon crystallite size of a (111) plane of the silicon-based additive measured by an X-ray diffraction (XRD) analysis is in a range from 100 nm to 500 nm.

In some embodiments, the silicon-based additive may include polycrystalline silicon.

In some embodiments, the content of the silicon-based additive may be in a range from 0.3 wt% to 1.0 wt% based on the total solid weight of the anode active material layer.

In some embodiments, the silicon crystallite size of the (111) plane of the silicon-based additive measured by an X-ray diffraction (XRD) analysis may be in a range from 100 nm to 300 nm.

In some embodiments, an average particle diameter of the silicon-based additive may be in a range from 1 µm to 10 µm.

In some embodiments, the silicon-based additive may include at least one selected from the group consisting of pure silicon, a silicon-carbon composite, a silicon alloy, a silicon oxide and a mixture of two or more therefrom.

In some embodiments, the silicon-carbon composite may include a structure in which a silicon particle and a carbon-based particle are bonded to each other.

In some embodiments, the silicon-carbon composite may include a silicon particle core and a carbon coating layer on a surface of the silicon particle core.

In some embodiments, the silicon-carbon composite may include a carbon-based particle core and a silicon coating layer on a surface of the carbon-based particle core.

In some embodiments, the carbon-based active material may include a crystalline carbon or an amorphous carbon.

A lithium secondary battery includes the above-described anode for a lithium secondary battery, and a cathode opposing the anode electrode, and a separator interposed between the cathode and the anode electrode.

In some embodiments, the cathode may include a cathode active material including nickel, and a content of nickel among metals included in the cathode active material except for lithium may be 80 mol% or more.

An anode for a lithium secondary battery according to embodiments of the present disclosure includes a silicon additive, and may provide an improved capacity retention of the secondary battery at high temperature and may reduce an amount of gas generated during repeated charge and discharge cycles.

### BRIEF DESCRIPTION OF THE DRAWINGS

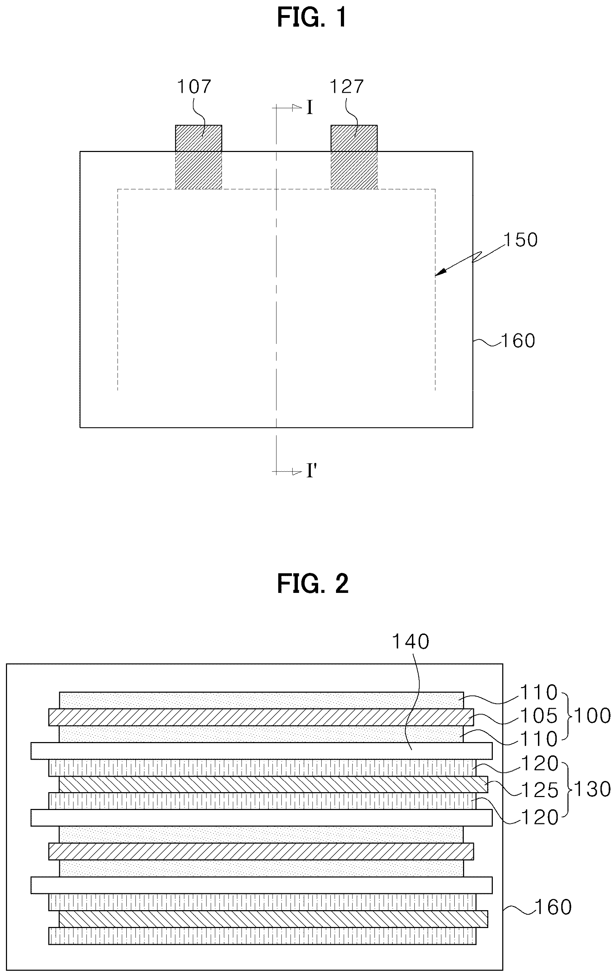

FIG. 1 and FIG. 2 are a schematic plan view and a schematic cross-sectional view of a lithium secondary battery, respectively, according to example embodiments.

### DETAILED DESCRIPTION OF THE EMBODIMENTS

According to embodiments of the present disclosure, an anode for a lithium secondary battery includes an anode current collector and an anode active material layer disposed on the anode current collector. The anode active material layer includes a carbon-based active material and a silicon-based additive.

According to embodiments of the present disclosure, a lithium secondary battery may include the anode.

The lithium secondary battery according to the present disclosure may be widely applied in green technology fields such as an electric vehicle, a battery charging station, a solar power generation, a wind power generation, etc., using a battery, etc. The lithium secondary battery according to the present disclosure may be used for eco-friendly electric vehicles, hybrid vehicles, or the like, to prevent a climate change by suppressing air pollution and greenhouse gas emissions. etc.

The terms "top surface", "bottom surface", etc., used herein indicate relative positions of each element, and are not intended to designate an absolute upper-lower relationship.

Hereinafter, detailed descriptions of the present disclosure will be described in detail with reference to accompanying drawings and example embodiments. However, those skilled in the art will appreciate that such embodiments are provided to further understand the spirit of the present inventive concepts and do not limit subject matters to be protected as disclosed in the detailed description and appended claims.

In example embodiments, an anode active material layer for a lithium secondary battery may include the carbon-based active material and the silicon-based additive. The carbon-based active material and the silicon-based additive may be used together, so that life-span characteristics may be enhanced and gas generation may be suppressed under high-temperature conditions.

In an embodiment, the silicon-based additive may have a (111) plane in which a silicon crystallite size determined by an X-ray diffraction (XRD) analysis in a range from 100 nm to 500 nm. For example, the silicon crystallite size of the (111) plane in the silicon-based additive may be in a range from 100 nm to 300 nm, from 100 nm to 250 nm, or from 100 nm to 200 nm.

In the above range, CO and CO₂ gases generated from an electrolyte and a cathode during high-temperature operation of a secondary battery may be significantly reduced by the silicon-based additive.

For example, if the silicon crystallite size of the (111) plane obtained by the XRD analysis exceeds 500 nm, the silicon-based additive may expand excessively to cause a reduced capacity retention after charge and discharge cycles.

For example, if the (111) plane silicon crystallite size obtained through the XRD analysis is less than 100 nm, the CO and CO₂ gases generated from the electrolyte solution and the cathode after charge and discharge cycles at high temperature may not be sufficiently reduced.

In some embodiments, the silicon-based additive may include a single-crystal silicon or a polycrystalline silicon.

In an embodiment, the silicon-based additive may include the polycrystalline silicon. For example, the polycrystalline silicon has multiple crystal grains, and thus stress relief may be implemented, and cracks caused by a volume change during charging and discharging of the secondary battery may be dispersed.

In one embodiment, the silicon-based additive may be included in an amount from 0.1 wt% to 1.0 wt% based on a weight of a total solid content of the anode active material layer. For example, the content of the silicon-based additive may be in a range from, 0.3 wt% to 1.0 wt%, or from 0.5 wt% to 1.0 wt%.

In the above range, gas generated by a cathode degradation at high temperature may be significantly reduced.

For example, if the content of the silicon-based additive exceeds 1.0 wt% based on the weight of the total solid content of the anode active material layer, electrolyte consumption by the silicon-based additive may be increased to cause a decrease of the capacity retention.

For example, if the content of the silicon-based additive is less than 0.1 wt% based on the weight of the total solid content of the anode active material layer, the amount of gas generated at high temperature may not be sufficiently reduced to cause the decrease of the capacity retention of the secondary battery.

In example embodiments, an average particle diameter of the silicon-based additive may be in a range from 1 µm to 10 µm. For example, the silicon-based additive may have the average particle diameter in a range from 1 µm to 7 µm, or from 1 µm to 5 µm.

In the above range, structural stability of the secondary battery may be increased.

The average particle diameter (D50) of the silicon-based additive may be determined using a volume particle size distribution of the silicon-based additive obtained by a laser diffraction method (e.g., using MT 3000 from microtrac). D50 of the silicon-based additive may be calculated as a particle diameter at a 50% point of the volume particle size distribution.

In example embodiments, the silicon-based additive may include at least one selected from the group consisting of a pure silicon, a silicon-carbon composite, a silicon alloy, a silicon oxide, and a mixture of two or more therefrom.

In an embodiment, the silicon-carbon composite may include a structure in which silicon particles and carbon-based particles are bonded to each other. For example, the silicon-carbon composite may include a structure in which the silicon particles and the carbon-based particles are physically attached without a covalent bond or an ionic bond.

For example, the silicon-carbon composite may be prepared by pulverizing silicon to a larger particle size than that of the carbon-based particles, combining the silicon and carbon-based particles in a ratio from (10 to 40):(60 to 90) using a ball mill, heat-treating the silicon particles at a temperature of 700°C to 1300°C for 3 to 12 hours, and then pulverizing the resulting composite to a particle size of 10 µm or less.

In an embodiment, when the silicon-carbon composite includes a structure in which the silicon particles and carbon-based particles are bonded to each other, the silicon particles may have an average particle diameter from 1 µm to 10 µm, e.g. from 1 µm to 7 µm, or from 1 µm to 5 µm.

In the above range, structural stability of the secondary battery may be increased.

The average particle diameter (D50) of the silicon particles may be determined using a volume particle size distribution of the silicon particles obtained by a laser diffraction method (e.g., using MT 3000 from microtrac). D50 of the silicon particles may be calculated as a particle diameter at a 50% point of the volume particle size distribution.

In example embodiments, the silicon-carbon composite may include a silicon particle core and a carbon coating layer on the surface of the core.

For example, the silicon-carbon composite may be prepared by pulverizing silicon to an average particle size of 10 µm or less, and then surface carbon coating (e.g., by a chemical vapor deposition (CVD) process) using a hydrocarbon gas at a temperature from 700°C to 1300°C for 1 to 12 hours.

For example, the hydrocarbon gas may include an ethylene gas, an acetylene gas, a methane gas, or a propane gas.

In an embodiment, when including the silicon particle core and the carbon coating layer on the core surface, the silicon particles may have an average particle diameter in a range from 1 µm to 10 µm, e.g., from 1 µm to 7 µm, or from 1 µm to 5 µm.

In the above, structural stability of the secondary battery may be increased.

In example embodiments, the silicon-carbon composite may include a carbon-based particle core and a silicon coating layer on a core surface.

For example, the silicon-carbon composite may be prepared by depositing silicon on a carbon structure using a Si-based gas at a temperature from 200°C to 600°C for 24 to 48 hours.

For example, the carbon structure may include a resin carbon structure, a biomass carbon structure, or an activated carbon.

For example, the Si-based gas may include a silane gas or a disilane gas.

In example embodiments, the carbon-based active material may include a crystalline carbon or an amorphous carbon.

In an embodiment, the amorphous carbon may include hard carbon, soft carbon, coke, a mesocarbon microbead (MCMB), a mesophase pitch-based carbon fiber (MPCF), or the like.

In an embodiment, the crystalline carbon may include a graphite-based carbon such as artificial graphite, natural graphite, a graphitized coke, a graphitized MCMB or graphitized MPCF.

In an embodiment, a content of the carbon-based active material may be in a range from 75 wt% to 99 wt%, from 85 wt% to 98 wt%, or from 95 wt% to 98 wt% based on the total solid content of the anode active material layer. In the above range, an energy density of the anode may be improved, and a power and a capacity of the lithium secondary battery may be further improved.

In an embodiment, the anode for a lithium secondary battery may further include a conductive material. The conductive material may promote an electron transfer. For example, the conductive material may include a carbon-based conductive material such as graphite, carbon black, graphene or carbon nanotube, and/or a metal-based conductive material such as tin, tin oxide, titanium oxide, a perovskite material including LaSrCoO₃ or LaSrMnO₃, etc.

For example, a content of the conductive material may be in a range from 0.1 wt% to 5 wt%, or from 1 wt% to 3 wt% based on the total solid content of the anode active material layer.

In an embodiment, the anode for a lithium secondary battery may further include a binder. For example, a styrene-butadiene rubber (SBR) or an acrylic binder may be included to enhance compatibility with the graphite-based active material, and may be used together with a thickener such as carboxymethyl cellulose (CMC).

As described above, the anode may include the anode current collector and the anode active material layer formed on at least one surface of the anode current collector. The anode active material layer may be formed on both surfaces (e.g., top and bottom surfaces) of the anode current collector.

The anode active material layer may be formed by coating, drying and/or pressing a composition for a secondary battery anode including the carbon-based active material and the silicon-based additive on at least one surface of the anode current collector.

In example embodiments, the anode composition for a secondary battery may be provided in a slurry form and may include the anode active material, the binder, the conductive agent, and the thickener.

For example, the anode active material layer may include the anode active material, the binder and the silicon-based additive.

The anode current collector may include gold, stainless steel, nickel, aluminum, titanium, copper, or an alloy thereof. For example, the anode current collector may include copper or a copper alloy.

In some embodiments, a content of the anode active material may be in a range from 75 wt% to 99 wt%, from 85 wt% to 98 wt%, or from 95 wt% to 98 wt% based on the total weight of the anode active material layer.

In some embodiments, a content of the binder may be in a range from 0.5 wt% to 20 wt%, 1 wt% to 10 wt%, 2 wt% to 5 wt%, or 1 wt% to 4 wt% based on the total weight of the anode active material layer.

In an embodiment, the anode active material layer may further include the conductive material. In an embodiment, a content of the conductive material may be in a range from 0.1 wt% to 5 wt%, or from 1 wt% to 3 wt% based on the total weight of the anode active material layer.

FIGS. 1 and 2 are a schematic plan view and a schematic cross-sectional view, respectively, illustrating a lithium secondary battery according to example embodiments. For example, FIG. 2 is a cross-sectional view taken along a line I-I' of FIG. 1 in a thickness direction.

Referring to FIGS. 1 and 2, the lithium secondary battery may include a cathode 100 and an anode 130 according to the above-describe embodiments facing the cathode 100.

The anode 130 may include an anode current collector 125 and an anode active material layer 120 formed on at least one surface of the anode current collector 125.

The cathode 100 may include a cathode current collector 105 and a cathode active material layer 110 formed by coating a cathode active material on at least one surface of the cathode current collector 105.

For example, a cathode slurry may be prepared by mixing and stirring the cathode active material with a cathode conductive material and/or a cathode binder in a solvent. The cathode slurry may be coated on the cathode current collector 105, dried and pressed to form the cathode 100.

The cathode current collector 105 may include stainless steel, nickel, aluminum, titanium, or an alloy thereof. The cathode current collector 105 may also include aluminum or stainless steel surface-treated with carbon, nickel, titanium, or silver.

For example, the cathode active material may include one or more compound selected from a lithium iron phosphate compound, a lithium cobalt oxide, a lithium manganese oxide, a lithium nickel oxide or a lithium composite oxide. For example, the cathode active material may include a layered compound such as lithium cobalt oxide (LiCoO₂) or lithium nickel oxide (LiNiO₂), a lithium manganese oxide such as LiMnO₃, LiMn₂O₃ or LiMnO₂, a lithium copper oxide (Li₂CuO₂), LiV₃O₈, LiFe₃O₄, a vanadium oxide such as V₂O₅ or Cu₂VO₇, a lithium iron phosphate compound such as LiFePO₄.

In an embodiment, the cathode active material may include a lithium transition metal oxide represented by Chemical Formula 1.

[Chemical Formula 1 ] LiₐNi_{b}M_{1-b}O₂

In Chemical Formula 1, 0.95≤a≤1.10, b≥0.5, and M may include at least one element selected from the group consisting of Na, Mg, Ca, Y, Ti, Sr, Hf, V, Nb, Ta, Cr, Mo, W, Mn, Co, Fe, Cu, Ag, Zn, B, Al, Ga, C, Si, Sn, Ba and Zr.

In an embodiment, the lithium transition metal oxide includes nickel (Ni) and may further include at least one of cobalt (Co) or manganese (Mn). For example, the lithium transition metal oxide may include a nickel-cobalt-manganese (NCM)-based lithium oxide.

Nickel (Ni) may be provided as a metal associated with the capacity of the lithium secondary battery.

In an embodiment, the cathode may include a cathode active material containing Ni, and a content of Ni content of the cathode active material may be 80 mol% or more, 90 mol% or more, 92 mol% or more, or 95 mol% or more among metals excluding lithium. In the above range, the capacity and the power of the lithium secondary battery may be improved.

In an embodiment, cobalt (Co) may enhance a conductivity and may reduce a resistance of the lithium secondary battery. In an embodiment, manganese (Mn) may improve mechanical and electrical stability of the lithium secondary battery.

The chemical structure represented by Chemical Formula 1 represents a bonding relationship in a lattice structure or a crystal structure of the lithium transition metal oxide, and does not exclude another additional element. For example, M may be provided as a main active element of the lithium transition metal oxide. Chemical formula 1 is provided to express the bonding relationship of the main active element, and is not to be understood as a formula encompassing introduction and substitution of the additional element.

In an embodiment, an auxiliary element may be further included in addition to the main active element to enhance chemical stability of the crystal structure. The auxiliary element may be incorporated into the crystal structure to form a bond, and this case is to be understood to fall within a scope of the chemical structure represented by Chemical Formula 1.

The cathode binder may include vinylidene fluoride-hexafluoropropylene copolymer (PVDF-co-HFP), polyvinylidene fluoride (PVDF), polyacrylonitrile, polymethylmethacrylate, nitrile butadiene rubber, or the like.

The cathode conductive material may include a carbon-based conductive material such as graphite, carbon black, graphene, carbon nanotubes, and/or a metal-based conductive material such as tin, tin oxide, titanium oxide, a perovskite material including LaSrCoO₃ or LaSrMnO₃, or the like.

In some embodiments, a separator 140 may be interposed between the cathode 100 and the anode 130. The separator 140 may include a porous polymer film formed of a polyolefin-based polymer such as an ethylene homopolymer, a propylene homopolymer, an ethylene/butene copolymer, an ethylene/hexene copolymer, an ethylene/methacrylate copolymer, or the like. The separator 140 may also include a nonwoven fabric formed of a high-melting-point glass fiber, a polyethylene terephthalate fiber, or the like.

In example embodiments, an electrode cell may be defined by the cathode 100, the anode 130 and the separator 140, and a plurality of the electrode cells may be repeatedly arranged to form an electrode assembly 150. In some embodiments, the electrode assembly 150 may be formed as a winding type, a stacking type, a z-folding type or a stack-folding type.

The electrode assembly 150 may be housed in a case 160 together with an electrolyte solution to defining a lithium secondary battery. For example, the electrolyte solution may impregnate the electrode assembly 150.

As illustrated in FIG. 1, electrode tabs (a cathode tab and an anode tab) may protrude from the cathode current collector 105 and the anode current collector 125 of each electrode cell, and may extend to one side of the case 160. The electrode tabs may be fused together with the one side of the case 160 to form electrode leads (a cathode lead 107 and an anode lead 127) that may extend or may be exposed to an outside of the case 160.

The lithium secondary battery may be fabricated in a cylindrical type using a can, a prismatic type, a pouch type, or a coin type.

The invention relates also to the following numbered aspects:
Aspect 1. An anode for a lithium secondary battery, comprising:
   an anode current collector; and
   an anode active material layer on the anode current collector, the anode active material layer comprising a carbon-based active material and a silicon-based additive,
   wherein a content of the silicon-based additive is in a range from 0.1 wt% to 1.0 wt% based on a total solid weight of the anode active material layer,
   a silicon crystallite size of a (111) plane of the silicon-based additive measured by an X-ray diffraction (XRD) analysis is in a range from 100 nm to 500 nm.
Aspect 2. The anode for a lithium secondary battery of aspect 1, wherein the silicon-based additive comprises polycrystalline silicon.
Aspect 3. The anode for a lithium secondary battery of aspect 1 or 2, wherein the content of the silicon-based additive is in a range from 0.3 wt% to 1.0 wt% based on the total solid weight of the anode active material layer.
Aspect 4. The anode for a lithium secondary battery of any one of aspects 1 to 3, wherein the silicon crystallite size of the (111) plane of the silicon-based additive measured by the XRD analysis is in a range from 100 nm to 300 nm.
Aspect 5. The anode for a lithium secondary battery of any one of aspects 1 to 4, wherein an average particle diameter of the silicon-based additive is in a range from 1 µm to 10 µm.
Aspect 6. The anode for a lithium secondary battery of any one of aspects 1 to 5, wherein the silicon-based additive comprises at least one selected from the group consisting of pure silicon, a silicon-carbon composite, a silicon alloy, a silicon oxide and a mixture of two or more therefrom.
Aspect 7. The anode for a lithium secondary battery of aspect 6, wherein the silicon-carbon composite comprises a structure in which a silicon particle and a carbon-based particle are bonded to each other.
Aspect 8. The anode for a lithium secondary battery of aspect 6 or 7, wherein the silicon-carbon composite comprises a silicon particle core and a carbon coating layer on a surface of the silicon particle core.
Aspect 9. The anode for a lithium secondary battery of any one of aspects 6 to 8, wherein the silicon-carbon composite comprises a carbon-based particle core and a silicon coating layer on a surface of the carbon-based particle core.
Aspect 10. The anode for a lithium secondary battery of any one of aspects 1 to 9, wherein the carbon-based active material comprises a crystalline carbon or an amorphous carbon.
Aspect 11. A lithium secondary battery, comprising:
   the anode for a lithium secondary battery according to any one of aspects 1 to 10;
   a cathode opposing the anode; and
   a separator interposed between the cathode and the anode.
Aspect 12. The lithium secondary battery of aspect 11, wherein the cathode comprises a cathode active material comprising nickel, and a content of nickel among metals included in the cathode active material except for lithium is 80 mol% or more.

### Preparation of silicon-based additives (A-1)

An additive was prepared by pulverizing polycrystalline silicon to an average particle size of 5 µm. A Si crystallite size of a (111) plane measured by an X-ray diffraction (XRD) analysis was 199 nm.

### Preparation of silicon-based additive (A-2)

Polycrystalline silicon was pulverized to an average particle size of 5 µm. The silicon particles were carbon-coated by a CVD process at 900°C using an ethylene gas for 3 hours to prepare an additive having an average particle size of 5 µm. A Si crystallite size of a (111) plane measured by the XRD analysis was 274 nm.

### Preparation of silicon-based additive (A-3)

Polycrystalline silicon was pulverized to an average particle size of 5 µm. The silicon particles were carbon-coated by a CVD process at 900°C using an ethylene gas for 5 hours to prepare an additive having an average particle size of 5 µm. A Si crystallite size of a (111) plane measured by the XRD analysis was 512 nm.

### Preparation of silicon-based additive (A-4)

Polycrystalline silicon was pulverized to an average particle size of 100 nm. The silicon particles were carbon-coated by a CVD process at 900°C using an ethylene gas for 3 hours to prepare an additive having an average particle size of 105 nm. A Si crystallite size of a (111) plane measured by the XRD analysis was 87 nm.

### Preparation of Silicon-based additive (A-5)

Polycrystalline silicon was pulverized to an average particle size of 2 µm, and then mixed with pitch in a weight ratio of 2:8 using a ball mill to prepare a mixture. The mixture of polycrystalline silicon and pitch was heat-treated at 900°C for 6 hours, and then pulverized to a 5 µm particle size to obtain an additive. A Si crystallite size of a (111) plane measured by the XRD analysis was 112 nm.

### Preparation of silicon-based additive (A-6)

Polycrystalline silicon was pulverized to an average particle size of 100 nm, and then mixed with pitch in a weight ratio of 2:8 using a ball mill to prepare a mixture. The mixture of polycrystalline silicon and pitch was heat-treated at 900°C for 6 hours, and then pulverized to a 5 µm particle size to obtain an additive. A Si crystallite size of a (111) plane measured by the XRD analysis was 19 nm.

### Preparation of silicon-based additive (A-7)

Single crystalline silicon was pulverized to an average particle size of 100 nm and then sprayed with pitch to form a 5-µm sized silicon particle. The formed single-crystal silicon was heat-treated at 900°C for 6 hours to prepare an additive. A Si crystallite size of a (111) plane measured by the XRD analysis was 25 nm.

### Preparation of silicon-based additive (A-8)

A silicon oxide was pulverized to an average particle size of 5 µm. The silicon particles were carbon-coated by a CVD process at 900°C using an ethylene gas for 3 hours to prepare an additive having an average particle size of 5 µm. A Si crystallite size of a (111) plane measured by the XRD analysis was 5 nm.

### Preparation of silicon-based additive (A-9)

Si was deposited on activated carbon having an average particle size of 8 µm at 450°C for 12 hours using a silane gas to obtain an additive having an average particle size of 8 µm. A Si crystallite size of a (111) plane measured by the XRD analysis was 3 nm.

### Preparation of silicon-based additive (A-10)

Si was deposited on activated carbon having an average particle size of 8 µm at 450°C for 36 hours using a silane gas to obtain an additive having an average particle size of 8 µm. A Si crystallite size of a (111) plane measured by the XRD analysis was 103 nm.

The specific XRD analysis equipment and conditions used to measure the silicon crystallite size as described above are shown in Table 1 below.

**[Table 1]**

| <XRD analysis equipment and conditions> | |
|---|---|
| Maker | PANalytical |
| Anode material | Cu |
| K-Alpha1 wavelength | 1.540598 Å |
| Generator voltage | 45 kV |
| Tube current | 40 mA |
| Scan Range | 10~120° |
| Scan Step Size | 0.0065° |
| Divergence slit | 1/4° |
| Antiscatter slit | 1/2° |

### Example 1

### (1) Preparation of anode for lithium secondary battery

The silicon-based additive according to Table 1 was added in a content (wt%) shown in Table 2 below. Artificial graphite as an anode active material was added so that a total weight of the additive and the anode active material became 96 wt%. 0.5 wt% of carbon nanotube (CNT) as a conductive material, 2 wt% of styrene-butadiene rubber (SBR) as a binder and 1.5 wt% of carboxymethyl cellulose (CMC) as a thickener were added to water and mixed to prepare an anode composition for a lithium secondary battery.

The anode composition was uniformly coated on a 10 µm-thick copper foil (an anode current collector), dried and pressed to prepare an anode.

### (2) Preparation of lithium secondary battery

A cathode slurry was prepared by mixing 96 wt% of a cathode active material as shown in Table 2, 1 wt% carbon nanotubes (CNT) as a conductive material, and 3 wt% PVDF as a binder. The cathode slurry was uniformly coated on a 10 µm-thick aluminum foil, dried and pressed to prepare a cathode.

The cathode and the anode were each cut to a predetermined size and stacked with a separator (polyethylene, thickness: 14 µm) interposed therebetween to obtain an electrode assembly.

The electrode assembly was placed in an outer case, and an electrolyte solution was injected to obtain a lithium secondary battery. A 1 M LiPF₆ solution using a solvent mixture of EC/EMC (30:70 v/v) was prepared and 3 vol% FEC was added to prepare the electrolyte solution.

### Examples 2 to 7 and Comparative Examples 1 to 10

An anode for a lithium secondary battery and a lithium secondary battery were manufactured using the same method as that in Example 1, except that types and contents of the cathode active material, the additive and additive content were changed as shown in Table 2 below.

**[Table 2]**

| | type of cathode active material | type of additive | additive content (wt%) |
|---|---|---|---|
| Example 1 | LiNi_{0.88}Co_{0.06}Mn_{0.06}O₂ | A-1 | 0.5 |
| Example 2 | LiNi_{0.88}Co_{0.06}Mn_{0.06}O₂ | A-1 | 1.0 |
| Example 3 | LiNi_{0.88}Co_{0.06}Mn_{0.06}O₂ | A-2 | 1.0 |
| Example 4 | LiNi_{0.88}Co_{0.06}Mn_{0.06}O₂ | A-5 | 1.0 |
| Example 5 | LiNi_{0.88}Co_{0.06}Mn_{0.06}O₂ | A-10 | 1.0 |
| Example 6 | LiNi_{0.8}Co_{0.1}Mn_{0.1}O₂ | A-1 | 1.0 |
| Example 7 | LiNi_{0.6}Co_{0.2}Mn_{0.2}O₂ | A-1 | 1.0 |
| Comparative Example 1 | LiNi_{0.88}Co_{0.06}Mn_{0.06}O₂ | - | - |
| Comparative Example 2 | LiNi_{0.88}Co_{0.06}Mn_{0.06}O₂ | A-1 | 1.5 |
| Comparative Example 3 | LiNi_{0.88}Co_{0.06}Mn_{0.06}O₂ | A-3 | 1.0 |
| Comparative Example 4 | LiNi_{0.88}Co_{0.06}Mn_{0.06}O₂ | A-4 | 1.0 |
| Comparative Example 5 | LiNi_{0.88}Co_{0.06}Mn_{0.06}O₂ | A-6 | 1.0 |
| Comparative Example 6 | LiNi_{0.88}Co_{0.06}Mn_{0.06}O₂ | A-7 | 1.0 |
| Comparative Example 7 | LiNi_{0.88}Co_{0.06}Mn_{0.06}O₂ | A-8 | 1.0 |
| Comparative Example 8 | LiNi_{0.88}Co_{0.06}Mn_{0.06}O₂ | A-9 | 1.0 |
| Comparative Example 9 | LiNi_{0.8}Co_{0.1}Mn_{0.1}O₂ | - | - |
| Comparative Example 10 | LiNi_{0.6}Co_{0.2}Mn_{0.2}O₂ | - | - |

### Experimental Example

### (1) Evaluation on capacity retention (800 cycles)

The lithium secondary battery was charged (CC-CV 0.3 C, 4.2 V, 0.03 C cut-off) and discharged (CC 0.3 C, 2.5 V cut-off) three times in a 45 °C chamber. A discharge capacity at the third cycle was set as an initial discharge capacity. Thereafter, 800 cycles, each of which included the charge and the discharge, were further repeated, and then a discharge capacity at the 800th cycles was measured.

The initial discharge capacity was divided by the discharge capacity at the 800th cycles, and the result was converted to a percentage (%) to evaluate life-span property.

### (2) Measurement of gas generation during repeated charge and discharge

Each lithium secondary battery of Examples and Comparative Examples was subjected to 800 cycles of charging (CC-CV 0.3C 4.2V 0.03C CUT-OFF) and discharging (CC 0.3C 2.5V CUT-OFF) in a 45°C chamber. Thereafter, the battery was taken out from the chamber and a gas generation was measured using a gas chromatograph (Chromatography-Refinery Gas Analyzer 7890, Agilent). Specifically, to measure the gas generation, a hole was formed in a vacuum chamber of a predetermined volume (V), and a pressure change was measured to calculate a volume of generated gas.

The measurement and evaluation results are shown in Table 3 below.

**[Table 3]**

| | 45 °C capacity retention (%, 800 cycles) | 45 °C gas generation (ml, 800 cycles) |
|---|---|---|
| Example 1 | 84.7 | 37 |
| Example 2 | 85.1 | 19 |
| Example 3 | 84.8 | 15 |
| Example 4 | 84.1 | 26 |
| Example 5 | 83.5 | 31 |
| Example 6 | 85.7 | 18 |
| Example 7 | 85.4 | 37 |
| Comparative Example 1 | 83.2 | 238 |
| Comparative Example 2 | 71.2 | 10 |
| Comparative Example 3 | 76.3 | 8 |
| Comparative Example 4 | 80.5 | 79 |
| Comparative Example 5 | 83.0 | 187 |
| Comparative Example 6 | 82.5 | 159 |
| Comparative Example 7 | 81.6 | 198 |
| Comparative Example 8 | 82.9 | 215 |
| Comparative Example 9 | 84.5 | 199 |
| Comparative Example 10 | 85.2 | 45 |

Referring to Table 3, in Examples wherein 0.1 to 1.0 wt% of the silicon-based additive based on the total solid weight of the anode active material layer was included, and the silicon crystallite size of the (111) plane measured by the X-ray diffraction (XRD) analysis was in a range from 100 nm to 500 nm, the capacity retention at high temperature was overall improved and the amount of gas generation was overall reduced compared to those from Comparative Examples.

In Comparative Examples 1, 9 and 10 where the silicon-based additive was not included, the amount of gas generation was significantly increased compared to that from Example 1.

In Comparative Example 2 containing more than 1.0 wt% of the silicon-based additive based on the total solid weight of the anode active material layer, the capacity retention at high temperature was significantly reduced compared to that from Example 2.

In Comparative Example 4 where the silicon-based additive had the silicon crystallite size of the (111) plane measured by the XRD analysis of 100 nm or less, the amount of gas generation was significantly increased compared to that from Example 5.

The above description is merely an example applying the principles of the present disclosure, and other configurations may be further included within a range that does not depart from the scope of the present disclosure.

## Claims

1. An anode for a lithium secondary battery, comprising:
an anode current collector; and
an anode active material layer on the anode current collector, the anode active material layer comprising a carbon-based active material and a silicon-based additive,
wherein a content of the silicon-based additive is in a range from 0.1 wt% to 1.0 wt% based on a total solid weight of the anode active material layer,
a silicon crystallite size of a (111) plane of the silicon-based additive measured by an X-ray diffraction (XRD) analysis is in a range from 100 nm to 500 nm.

2. The anode for a lithium secondary battery of claim 1, wherein the silicon-based additive comprises polycrystalline silicon.

3. The anode for a lithium secondary battery of claim 1 or 2, wherein the content of the silicon-based additive is in a range from 0.3 wt% to 1.0 wt% based on the total solid weight of the anode active material layer.

4. The anode for a lithium secondary battery of any one of claims 1 to 3, wherein the silicon crystallite size of the (111) plane of the silicon-based additive measured by the XRD analysis is in a range from 100 nm to 300 nm.

5. The anode for a lithium secondary battery of any one of claims 1 to 4, wherein an average particle diameter of the silicon-based additive is in a range from 1 µm to 10 µm.

6. The anode for a lithium secondary battery of any one of claims 1 to 5, wherein the silicon-based additive comprises at least one selected from the group consisting of pure silicon, a silicon-carbon composite, a silicon alloy, a silicon oxide and a mixture of two or more therefrom.

7. The anode for a lithium secondary battery of claim 6, wherein the silicon-carbon composite comprises a structure in which a silicon particle and a carbon-based particle are bonded to each other.

8. The anode for a lithium secondary battery of claim 6 or 7, wherein the silicon-carbon composite comprises a silicon particle core and a carbon coating layer on a surface of the silicon particle core.

9. The anode for a lithium secondary battery of any one of claims 6 to 8, wherein the silicon-carbon composite comprises a carbon-based particle core and a silicon coating layer on a surface of the carbon-based particle core.

10. The anode for a lithium secondary battery of any one of claims 1 to 9, wherein the carbon-based active material comprises a crystalline carbon or an amorphous carbon.

11. A lithium secondary battery, comprising:
the anode for a lithium secondary battery according to any one of claims 1 to 10;
a cathode opposing the anode; and
a separator interposed between the cathode and the anode.

12. The lithium secondary battery of claim 11, wherein the cathode comprises a cathode active material comprising nickel, and a content of nickel among metals included in the cathode active material except for lithium is 80 mol% or more.
